# EUROPEAN PATENT APPLICATION

(11) **EP 2 001 106 A1**
(43) Date of publication of application: **10.12.2008**
(21) Application number: 07425352.7
(22) Date of filing: 06.06.2007
(51) Int. Cl.: H02K 7/18

(54) **Electric energy generator from passing vehicles or persons**

(71) Applicant: CER S.R.L., 00195 Roma (IT)
(72) Inventor: Facchiano, Giovanni CER S.R.L., 00195 Roma (IT)
(74) Representative: Iannone, Carlo Luigi

(57) **Abstract**

The present invention relates to an electric energy pressure generator, said generator being comprised of a lower statoric portion and of an upper statoric portion, a dampening spring and one or more magnets being coupled to said lower statoric portion, in such a way to move between a rest position, in which the spring is fully expanded, and a compression position, due to a load applied from above, said spring acting to bring back said permanent magnets in said rest position, said upper statoric portion being provided above said permanent magnets, and covering means being provided above said upper statoric portion, on which load passing above exerting a pressure on electric energy generator.

## Description

The present invention relates to an electric energy pressure generator.

More specifically, the invention relates to a system of the above kind, substantially exploiting passage (weight) of persons, vehicles and like for generation of electric energy, of the direct transmission percussion type.

Needless to underline always increasing interest in generation of electric energy in the cleanest and economic way. In the last years attempts have been made all over the world to find solutions permitting generating electric energy exploiting every available potential energy, in a clean, economic and simple way.

World requirements in this direction are always more pressing.

In this context it is included the solution suggested according to the present invention, aiming providing a solution permitting generating electric energy exploiting an potentially infinite energy (passage of persons, vehicles, and like), which is absolutely clean and free.

These and other results are obtained, according to the invention, suggesting a system of the above kind providing an electric energy pressure generator permitting optimally exploiting features of permanent magnets.

It is therefore specific object of the present invention an electric energy pressure generator, said generator being comprised of a lower statoric portion and of an upper statoric portion, a dampening spring and one or more magnets being coupled to said lower statoric portion, in such a way to move between a rest position, in which the spring is fully expanded, and a compression position, due to a load applied from above, said spring acting to bring back said permanent magnets in said rest position, said upper statoric portion being provided above said permanent magnets, and covering means being provided above said upper statoric portion, on which load passing above exerting a pressure on electric energy generator.

Preferably, according to the invention, said pressure generator provides three permanent magnets juxtaposed each other.

Particularly, according to the invention, said permanent magnets can be comprised of ferrite or neodymium permanent magnets.

Furthermore, according to the invention, it is possible providing a plurality of statoric elements.

Always according to the invention, each magnet has 16 poles.

Particularly, according to the invention, said magnets are keyed on a locking shaft, coupled with said lower statoric portion.

Always according to the invention, in order to produce direct tension electric energy, it can be provided a buffer battery permitting storing energy produced, even energy produced intermittently, and evenly dispensing the same to the inverter, bringing energy to the wished voltage (220V - 380V, ecc.) transformed into alternate current and set to the power grid.

The present invention will be now described, for illustrative but not limitative purposes, according to its preferred embodiments, with particular reference to the figures of the enclosed drawings, wherein:
figure 1 is a view of an electric energy pressure generator according to the invention;
figure 2 is an exploded view of generator of figure 1; and

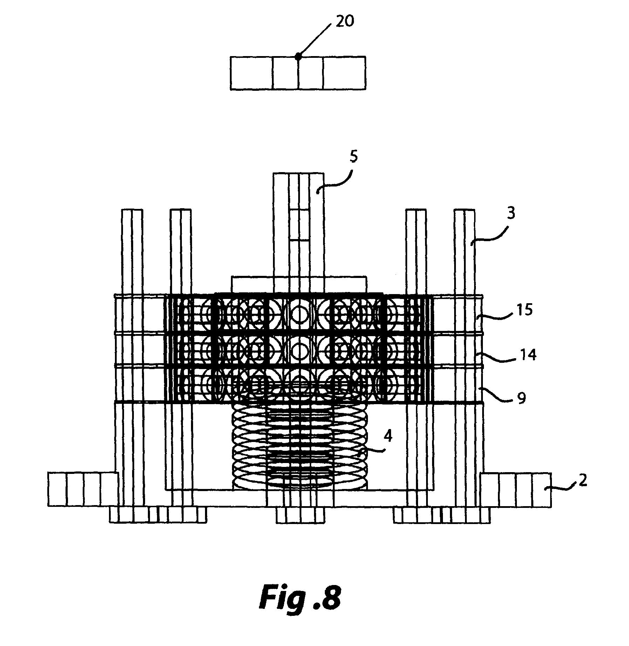

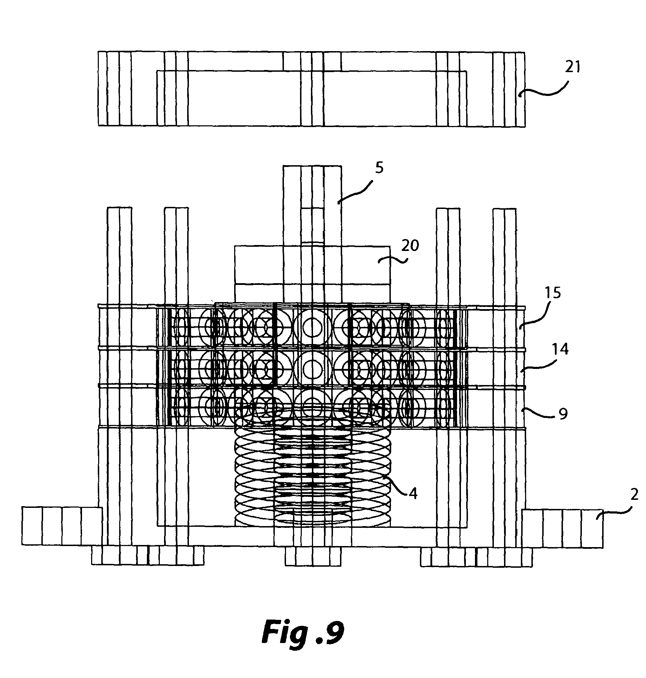

figures 3 - 11 are exploded views of generator of figure 1 in different assembling steps.

Observing figures of the enclosed drawings, it is shown an embodiment of the system according to the invention providing a pressure generator for transforming magnetic energy into electric energy by a vertical linear and not rotatory displacement.

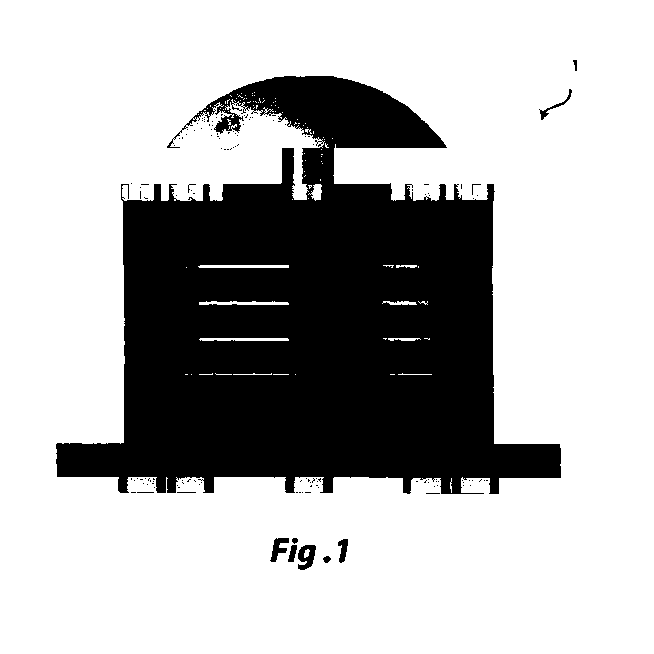

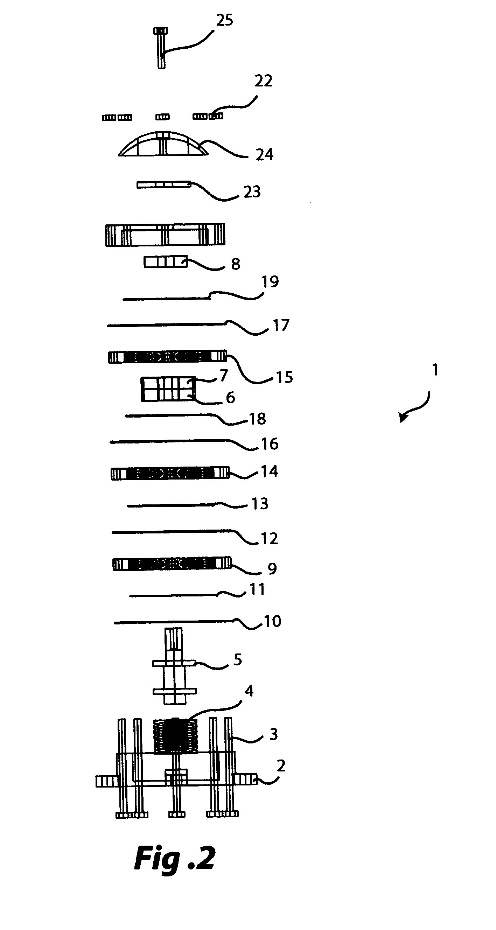

A generator 1 according to the invention is shown in figure 1, closed, while in figure 2 it is shown the same generator 1, and the same generator 1 is shown in an exploded view in figure 2, thus showing all the components.

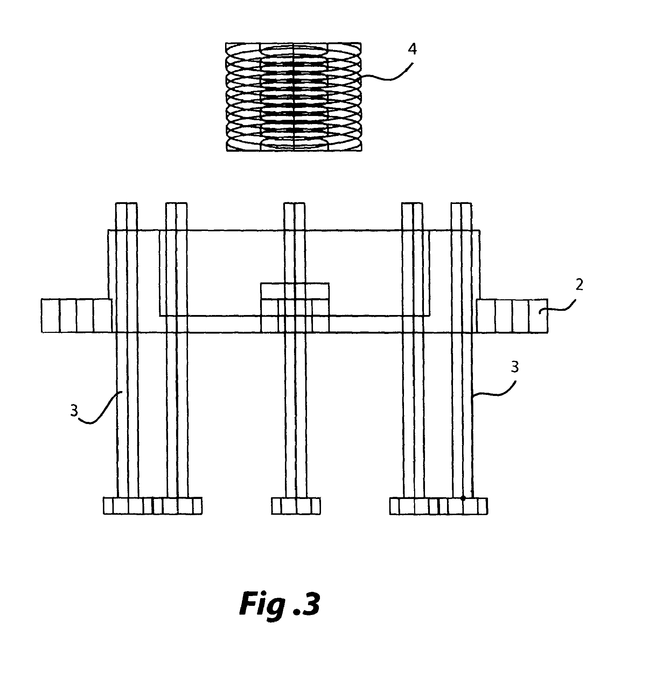

Particularly, in figure 3 it is shown the lower statoric portion 2, with pins 3, having such a length to block generator up to the upper statoric portion (that will be described in the following), and spring 4, fixedly coupled on the lower statoric portion 2, useful to push magnets upward once released the action caused by the weight acting from above.

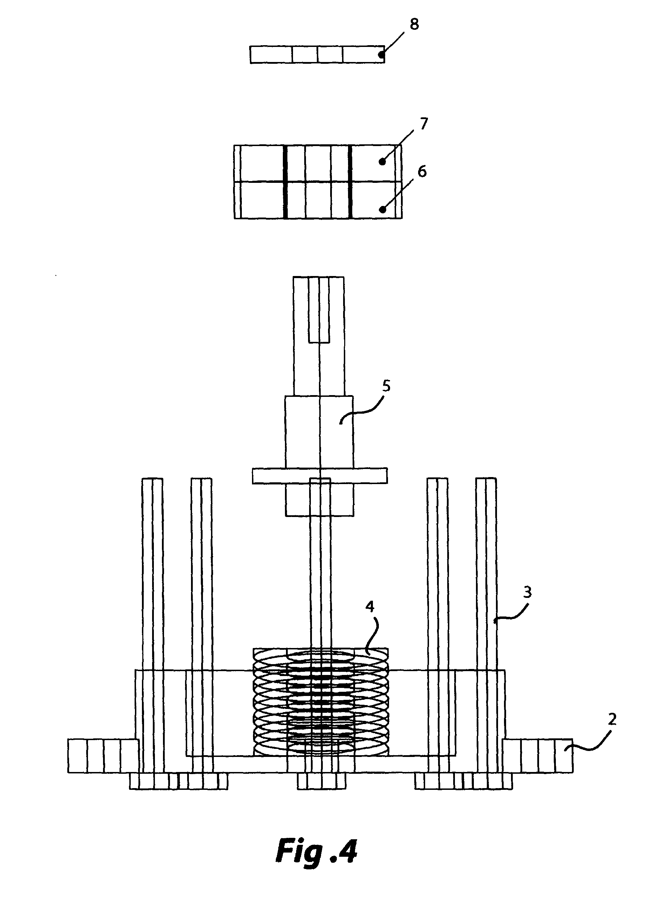

Magnets 6,7 locking shaft 5 (see figure 4) is provided above spring 4. Washer 8 blocks said magnets 6, 7 within the locking shaft.

Pressure of spring 4 will be calibrated so as to oppose to the resistance of magnets and to bring the same within the upper statoric portion.

Bobbins 9 are further shown in figures.

Bobbins 9 and spring 4 have a resistance lower than the compression weight of the body exerting pressure. For example, in case generator is placed under the road pavement and passing vehicles have an average weight for each axis of 1000 kg, bobbins 9 power and spring 4 resistance will be set at 950 kg, while if attraction of magnets to statoric portion is 300 kg, spring will have a return force of 350 kg.

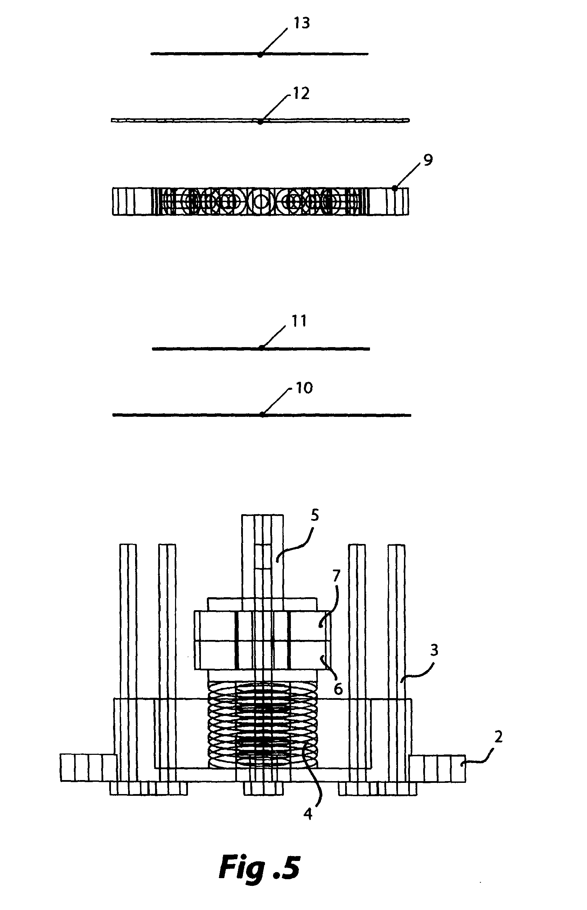

Positioning of first statoric portion is shown in figure 5, including bobbins 9 for producing electric energy, and providing a lower aluminium shim 12, an iron spacing lower washer 11, an upper aluminium shim 12, and an upper iron washer 13.

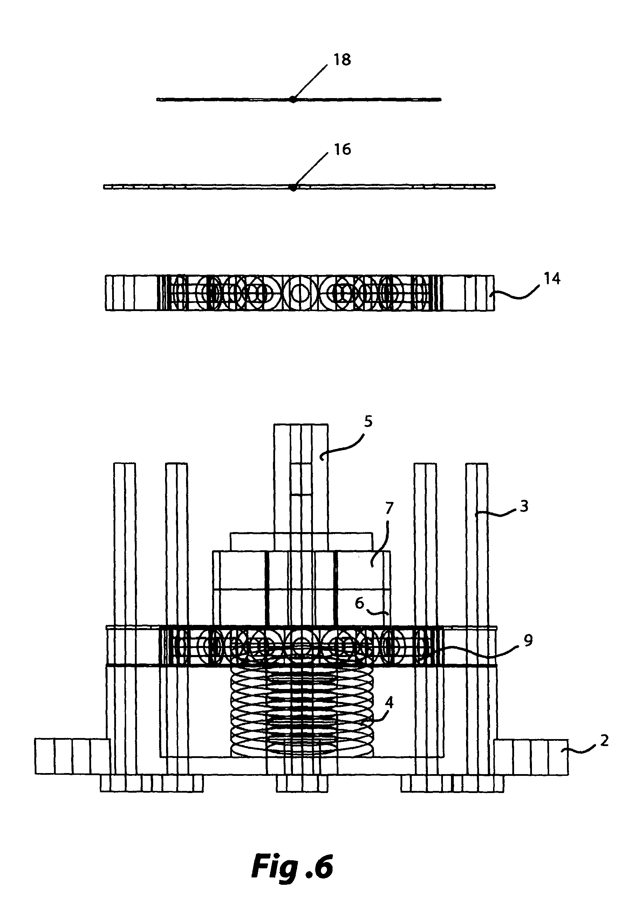

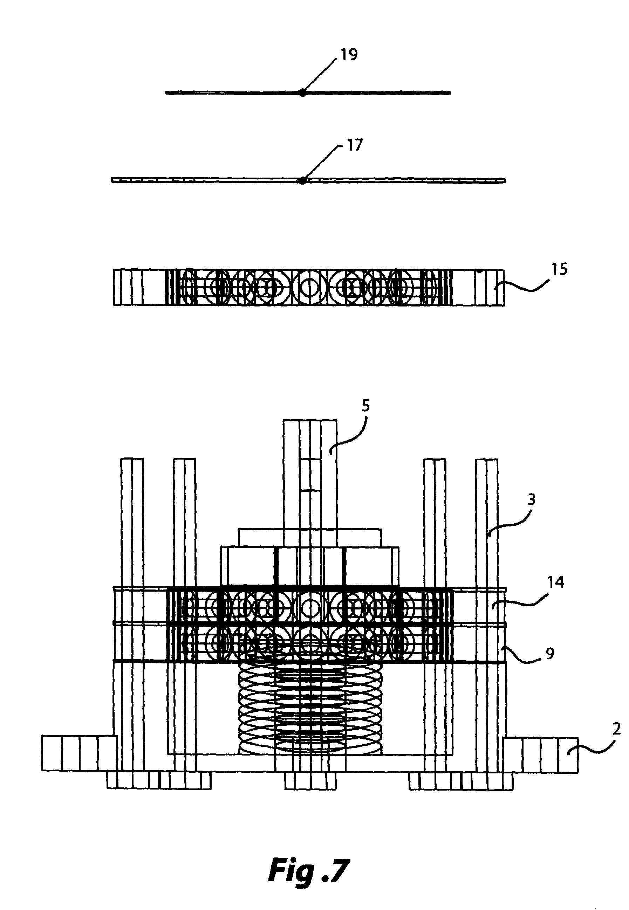

Observing now figures 6 and 7, two further statoric portions 14, 15 are shown, juxtaposed to the first statoric portion, so as to realise 48 poles. Also in this case, there are an upper aluminium shim 16, 17 and an iron upper washer 18, 19.

A spring or rigid rubber dampening element 20 is fixed above ring blocking magnets, in order to dampen spring 4 ascent.

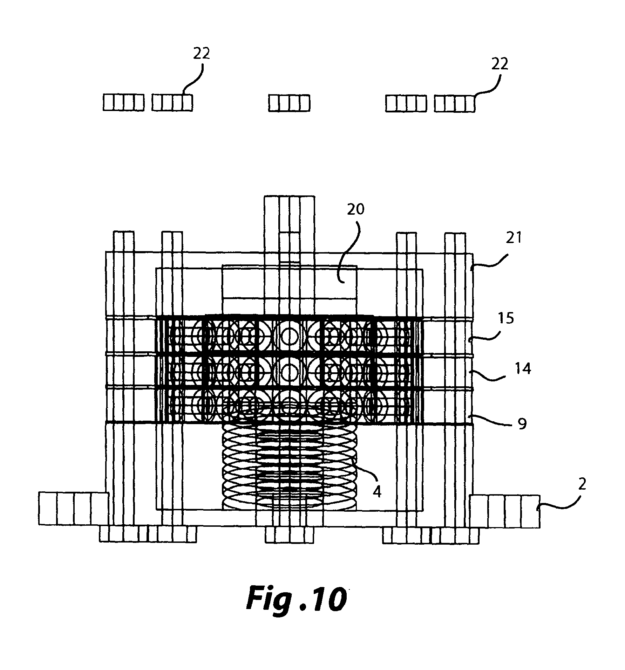

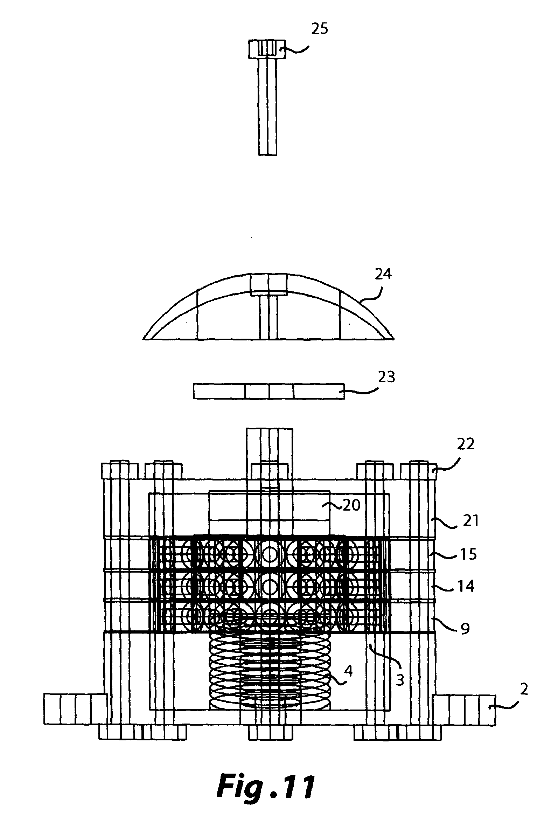

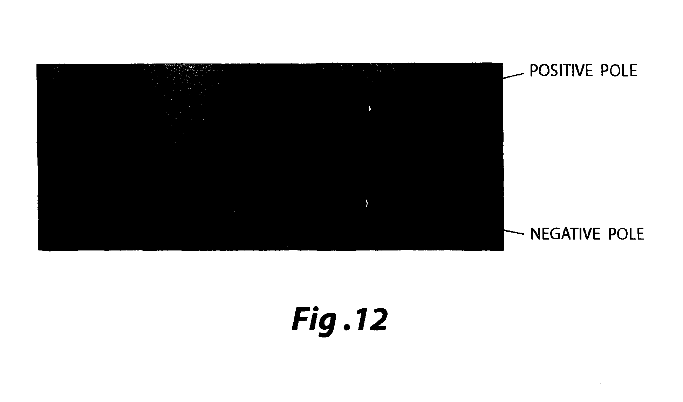

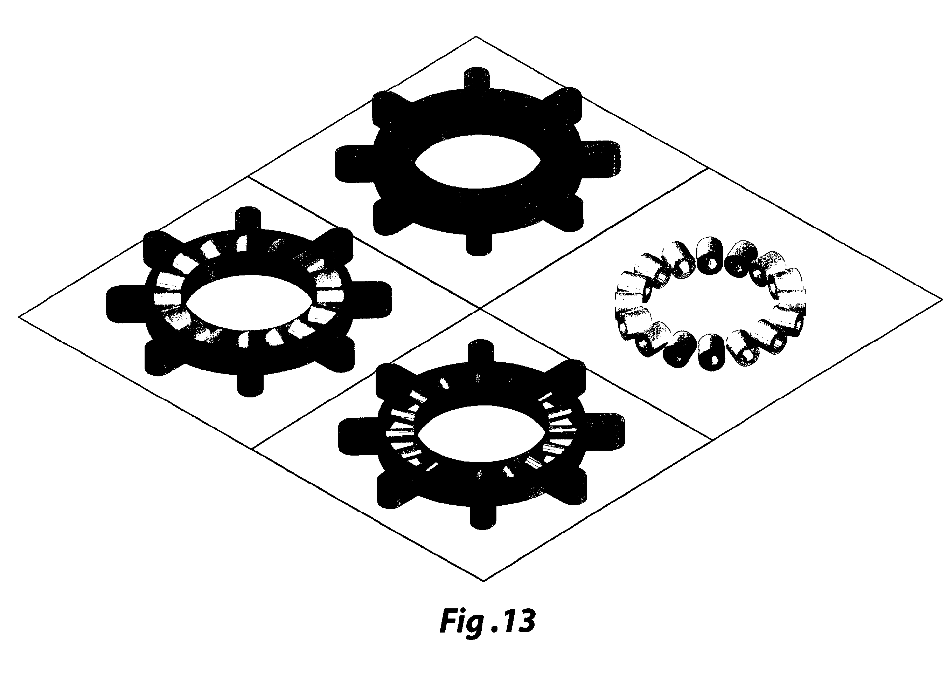

Thus, cover upper statoric portion 21 is mounted, blocked by nuts 22 (figure 10), and thus a further rubber dampening element23 is placed, and hemisphere 24 is blocked by a socket head screw pin 25 (see figure 11).

It is important to the invention that both pins 3 and magnets 9, 14, 15 locking shaft 5, and hemisphere 24, are comprised of antimagnetic steel, so as not to be subjected to permanent magnet attraction.

Power of generator 1 according to the invention can be increased in two ways, without substantially modifying its mechanical structure. First, it is possible replacing ferrite permanent magnets with neodymium magnets, thus increasing about 10 times generator power. Further, it is possible mounting a plurality of statoric elements with bobbins and permanent magnet crowns with a modular system.

Operation of magnetic generator and change of polarity for producing electric energy will be described in the following.

In a standard rotatory generator, magnets (2 poles, 4 poles, 8 poles) are placed on a rotoric axis along a 360° arc: higher is the number of poles in a generator, and higher is power.

For example, a 2 poles motor will produce for each 360° a positive negative frequency while an 8 poles generator, at the same number of rounds, will produce a four times higher power.

Generator according to the invention, having at least three statoric rings, has 48 poles, being it possible thus obtaining very small dimensions and large electric power generation.

To operate, an electric generator must change polarity of permanent magnets for each displacement; furthermore, permanent magnet poles, in order to exploit its maximum power, must have different polarities.

As it can be observed from the figures, magnets of generator according to the invention are correct, permitting proper variation of polarity.

On the basis of the above indications, power of generators 1 according to the invention will be determined and realised on the basis of the specific use and of body exerting pressure.

For example, in case they are employed in a shopping mall, passage of a person body can cause a pressure of 50/80 kg. On roads, weight of a vehicle can exert a pressure between 1000 and 1500 kg.

Otherwise, in case the generator is used in subways and railways, bodies can exert a pressure between 8000 and 12000 kg.

Delivering and distribution of electric energy produced as direct tension, e.g. in a shopping mall, provides that direct current low tension electric energy is stored within a buffer battery permitting accumulating energy produced even not continuously and evenly distributing the same to the inverter (battery is necessary since it permits taking energy intermittently produced and once charged can deliver the same at the power grid for a quite long period; it is obvious that in case of regular supply, battery will be by-passed since production will be uniform.

Battery is not necessary for large road and railway systems.

Produced energy is brought at inverter at the wished voltage (220 V - 380 V), transformed into alternate energy and sent in power grid, as in the existing fotovoltaic system. A meter can record produced energy that will be deduced from the invoice amount. All renewable energy systems can receive European Union financing.

Delivering and distribution of electric energy produced as alternate current provides that energy is directly produced as alternate current, thus making useless the provision of the inverter, and only requiring a transformer increasing tension. System for connection to the power grid is the same as described, but it is valid only for large systems (roads, subways and trains).

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Electric energy pressure generator, said generator being comprised of a lower statoric portion and of an upper statoric portion, a dampening spring and one or more magnets being coupled to said lower statoric portion, in such a way to move between a rest position, in which the spring is fully expanded, and a compression position, due to a load applied from above, said spring acting to bring back said permanent magnets in said rest position, said upper statoric portion being provided above said permanent magnets, and covering means being provided above said upper statoric portion, on which load passing above exerting a pressure on electric energy generator.

2. Electric energy pressure generator according to claim 1, **characterised in that** said pressure generator provides three permanent magnets juxtaposed each other.

3. Electric energy pressure generator according to one of the preceding claims, **characterised in that** said permanent magnets are comprised of ferrite or neodymium permanent magnets.

4. Electric energy pressure generator according to one of the preceding claims, **characterised in that** it is provided a plurality of statoric elements.

5. Electric energy pressure generator according to one of the preceding claims, **characterised in that** each magnet has 16 poles.

6. Electric energy pressure generator according to one of the preceding claims, **characterised in that** said magnets are keyed on a locking shaft, coupled with said lower statoric portion.

7. Electric energy pressure generator according to one of the preceding claims, **characterised in that**, in order to produce direct tension electric energy, it can be provided a buffer battery permitting storing energy produced, even energy produced intermittently, and evenly dispensing the same to the inverter, bringing energy to the wished voltage (220V - 380V, ecc.) transformed into alternate current and set to the power grid.
